# EUROPEAN PATENT SPECIFICATION

(11) **EP 4 418 533 B1**
(45) Date of publication and mention of the grant of the patent: **06.08.2025**
(21) Application number: 24156789.0
(22) Date of filing: 09.02.2024
(51) Int. Cl.: H02S 20/32

(54) **A DUAL AXIS SOLAR TRACKING MODULE**
ZWEIACHSIGES SONNENVERFOLGUNGSMODUL
MODULE DE POURSUITE SOLAIRE À DEUX AXES

(30) Priority: 15.02.2023 IL 30069823
(43) Date of publication of application: 21.08.2024
(73) Proprietor: Asayag Energy Ltd., 8714405 Sderot (IL)
(72) Inventor: Asayag, Roni, 7932000 Sde David (IL); Cohen, Yoel, 7407238 Nes Ziona (IL)
(74) Representative: Grünecker Patent- und Rechtsanwälte PartG mbB

(56) References cited:
- AU-A1- 2017 203 521
- KR-A- 20090 011 838
- KR-B1- 100 892 061
- KR-B1- 102 088 793
- US-A1- 2008 308 091
- US-A1- 2011 041 834

## Description

### FIELD OF THE INVENTION

The present invention relates in general to systems for utilizing solar radiation, and particularly to solar systems implementing a dual axis tracking technology.

### BACKGROUND OF THE INVENTION

The ever-growing environmental problems associated with increasing energy demands and growing resources' shortages, require new ways for utilizing energy sources and particularly for utilizing renewable sources. One such a technology relies on using solar trackers which are configured to tilt their solar collecting surfaces towards the sun. Among these solar trackers one may find solar panels, parabolic troughs, and heliostats.

For flat-panel photovoltaic systems, where solar radiation is converted into electric energy, the trackers are used to minimize the angle of incident between the incoming sun rays and the normal to the photovoltaic panels. By reducing this angle, the amount of energy produced from a given amount of installed power generating capacity, is increased.

Tracking systems are used in order to enhance the collection efficiently of solar radiation, as when the optical axis of the trackers is aligned with the incident solar radiation, the solar photovoltaic collector is able to maintain its relative position throughout the day by remaining in a normal position relative to the incident solar radiation rays.

The most efficient solar energy collection can be achieved by using a dual axis configuration that is configured to follow the sun orientation. In this case the design ensures that the radiation energy collected is at its maximal efficiency. To achieve this goal, the tracker follows the sun's position throughout the day along its east to west axis as well as orientation tracking that is carried out along a different axis, namely, the sun inclination. To track along both axes, there is a need to rotate the collecting devices, e.g., the photovoltaic panels, using two rotating mechanisms. First, around the north-south axis and second, the inclination above the horizon. To fulfill both rotations normally two motors are involved. In a typical case, the first motor is responsible for rotating a main post (for example as described in US 4285567A) or a wheel (as described for example in US 2021094417) from east to west, while another motor is used to rotate the panels by tilting them towards the horizon plane.

The two-rotation axes are independent of each other and the combined outcome of the movements along these two-rotation axes provides the final orientation. However, the common solution adapted by the prior art is a physical mechanism comprising the two motors and/or their driveshafts, which are located adjacent to each other. By this concept, each tracker has its own two motors. Consequently, the number of the panels per tracker are increased in order to implement a better ratio of panels/motor and hence achieving a costeffective solution. As a result, the aerial dimension of the frame that supports the panel tends to be increased and the prior art trackers tend to have larger dimensions and hence their size enforces adopting damping solutions to handle high torque forces that might be generated in case of an intensive wind.

Another solution was proposed by US 8704080B2 that discloses combining several long series of panels by using one moving motor via a linear rod or a cable that link all the rotating axes of the trackers, and additional tilt mechanism. This way, the rotation of many panels can be affected by a single motor. However, this design contains a special structure that is designed to oscillate in relation to the ground and cannot span over all angles that are needed in order to follow all year sun orientations.

Document KR 20090011838A discloses a dual axis solar tracking module with an inner element that can be rotated and translated.

The prior art solutions have a number of drawbacks. Rotating an increasing number of PV panels using the same rotating motor, results in an increasing weight which causes problems that adversely affect the motor's operation. Especially, having a large number of panels might create a large momentum, particularly under windy conditions, in which case, the motor will not be capable to operate properly by rotating the many panels frame as required.

Another disadvantage of the prior art systems in which such rigid tracking arrays designs are implemented, is, that filling the area used for the installation with multiple trackers will eventually need double number of motors for the 2 angles rotation per tracker.

Yet another problem associated with prior art trackers, arises from the recent trend that photovoltaic solar fields should not have an adverse footprint on the environment. Hence, applications such as dual use of the fields' areas became increasingly more interesting. For example, use of agriculture fields, green houses, fences, sideroads and roofs for generating solar driven energy thereat. Therefore, generating photovoltaic energy under complex topographical conditions becomes a leading necessity. However, to meet this challenge, systems unlike the prior art systems, require tracking solutions that can deal with such a complexity. It requires a tracker that can be cost effective, having light weight and have the ability to rely on the already existing underneath infrastructure for easy integration.

The present invention seeks to provide a solution that overcomes the above disadvantages of the prior art systems.

### SUMMARY OF THE DISCLOSURE

It is therefore an object of the present invention to provide a solar tracking device for use in a solar field which improves the operational efficiency of the solar field.

It is another object of the present invention, to provide a solar dual tracking device having a substantially reduced weight, which in turn reduces certain problems described-above that occur while using prior art trackers.

It is another object of the present invention, to provide a solar dual tracking module that enables using a flexible solar field design, by simply connecting any required number of panels' modules to each other.

It is another object of the present invention, to provide a solar dual tracking device that is adapted to be installed in a solar field in a way that is essentially free from problems associated with the installation of a solar field in a topographically nonuniform area.

It is another object of the present invention, to provide a solar dual tracking module that reduces substantially maintenance problems associated with maintaining a solar field where the solar dual tracking modules are installed.

Other objects of the invention will become apparent as the description of the invention proceeds.

According to a first embodiment, there is provided a dual axis solar tracking module, comprising:
at least one solar panel rotatably coupled to an element that extends laterally along the at least one solar panel, wherein that element is configured to rotate the at least one solar panel;
a frame, for mounting the at least one solar panel thereat;
a transmission system configured to enable rotating the dual axis solar tracking module along each of the two rotational axes;
wherein the transmission system is characterized in that it comprises one or more motors and a concentric arrangement having an outer hollow element and an inner element, and wherein the one or more motors are configured to rotate both the outer hollow element and the inner element;
wherein the outer hollow element is coupled to a transmission means configured to enable rotation of the dual axis solar tracking module along one of the two rotational orthogonal axes;
wherein the inner element is coupled to a transmission means configured to enable rotation of the dual axis solar tracking module along the other of the two rotational orthogonal axes; and
wherein the transmission system is configured to convert rotations of one member from among the outer hollow element and the inner element, into rotations affected along a horizontal axis, thereby enabling movement of the dual axis solar tracking module along two axes for tracking incident solar radiation.

According to another embodiment, the concentric arrangement allows the inner element to rotate independently from the rotation of the outer hollow element, and wherein the rotational movements of the inner element and the out outer hollow element are provided by using one or more motors.

In accordance with another embodiment, each of the inner element and the outer hollow element is provided with its own transmission mechanism.

By yet another embodiment, the dual axis solar tracking module further comprises two substantially horizontal bars, each connected to a respective transmission mechanism, and wherein movements of each of the horizontal bars affected by a respective motor, are converted into rotations of the corresponding inner element and outer hollow element.

According to still another embodiment, at least one of the two solar panels is a bi-facial photovoltaic panel.

In accordance with another embodiment, the dual axis solar tracking module is configured to be connected to another such a dual axis solar tracking module, by using a pair of horizontal bars.

By still another embodiment, the frame of the dual axis solar tracking module is configured to be attached to an object that has already been installed at a site where the dual axis solar tracking module is about to be mounted.

By yet another embodiment of the invention, the attachment of the dual axis solar tracking module to an object already installed at the site (e.g., a greenhouse), is carried out while that object is oriented at any arbitrary azimuth.

According to a further embodiment, the two different motors associated with the dual axis solar tracking module are located physically remotely from the dual axis solar tracking module.

According to another aspect of the invention, there is provided a system comprising a plurality of dual axis solar tracking modules as described herein, wherein the system is configured to operate by using only two motors.

In accordance with another embodiment of this aspect of the invention, a distance extending between dual axis solar tracking modules that belong to a first pair of dual axis solar tracking modules (e.g., tracking module No. 1 and tracking module No. 2) is different from a distance extending between another dual axis solar tracking modules, (e.g., tracking module No. 2 and tracking module No. 3).

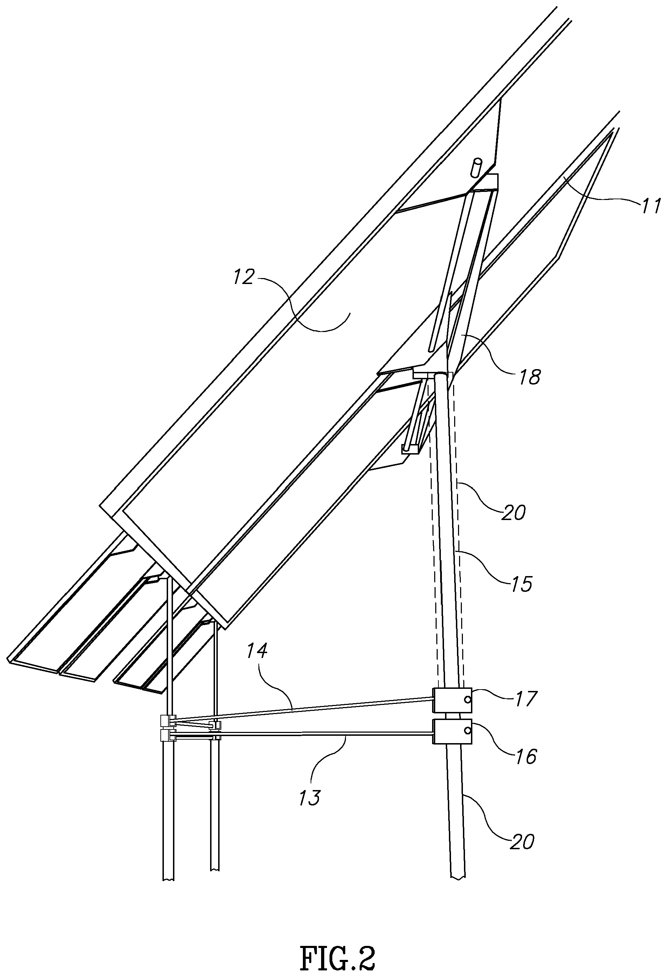

Moreover, by another embodiment of this aspect of the invention, at least two of the dual axis solar tracking modules are installed (located) at different orientations from each other (e.g., at different azimuths relative to one or both axes of the solar array). For example, let us assume that tracking module No. 1 and tracking module No. 2 are oriented at a first azimuth, whereas tracking module No. 3 is oriented at a second azimuth. By implementing this embodiment, the array (or part thereof) of dual axis solar tracking modules may be installed at any required shape, e.g., a jigsaw shape, and problems that might occur due to the presence of local topography obstacles at the installation site, can be avoided. As may be seen in Fig. 2, rods 13 and 14 are provided with an of changing their orientation.

By yet another embodiment of this aspect of the invention, the system further comprising a wind sensor which is configured be in communication with motors of said system which are responsible for the movement of the dual axis solar tracking modules, and wherein the wind sensor is configured to control the motors to move the dual axis solar tracking modules to a stow position or to a position so that the dual axis solar tracking modules are positioned parallel to the wind direction.

According to still another embodiment of this aspect of the invention, at least one pair of adjacent dual axis solar tracking modules are connected to each other by a pair of horizontal bars, and wherein a movement of one the pair of adjacent dual axis solar tracking modules induced by a motor, is translated by that pair of horizontal bars to a respective movement of the other of the pair of adjacent dual axis solar tracking modules.

By yet another embodiment of this aspect of the invention, the plurality of dual axis solar tracking modules of the system, are arranged in a row and are connected in a modular way, using inner polygonal connecting element and an outer matching hollow element, thereby enabling installation of rows of dual axis solar tracking modules having different lengths.

### BRIEF DESCRIPTION OF THE DRAWINGS

For a more complete understanding of the present invention, reference is now made to the following detailed description taken in conjunction with the accompanying drawings in which simplified schematics of the single axis solar tracking module are illustrated, wherein:
**FIG. 1** - illustrates a schematic view of a back view of an example of a dual axis solar tracking module construed in accordance with an embodiment of the present invention, wherein the dual axis solar tracking module is further provided with a couple of rods extending therefrom to enable connecting the dual axis solar tracking module to an adjacent dual axis solar tracking module;
**FIG. 2** - illustrates a schematic side view of a row of dual axis tracking modules shown as being connected to each other in a modular way;
**FIG. 3** - demonstrates an enlarged view of the area that includes the transmission element and the connection of the horizontal rods to the vertical concentric arrangement;
**FIG. 4** **-** demonstrates an extended view of the upper part of the dual axis tracking module;
**FIG. 5** - demonstrates an extended view of the transmission assembly of a dual axis tracking module construed in accordance with an embodiment of the present invention; and
**FIG. 6** - demonstrates an extended view of the bottom area of a dual axis tracking module construed in accordance with an embodiment of the present invention.

### DETAILED DESCRIPTION

In this disclosure, the term "comprising" is intended to have an open-ended meaning so that when a first element is stated as comprising a second element, the first element may also include one or more other elements that are not necessarily identified or described herein, or recited in the claims.

In the following description, for the purposes of explanation, numerous specific details are set forth in order to provide a thorough understanding of the present invention. It should be apparent, however, that the present invention may be practiced without these specific details.

The present invention aims to provide a solar tracking device that can be installed in areas having varying topography, existing infrastructures, roofs, greenhouses and fences, in other words, constrains to which the systems known in the art, do not provide a proper solution.

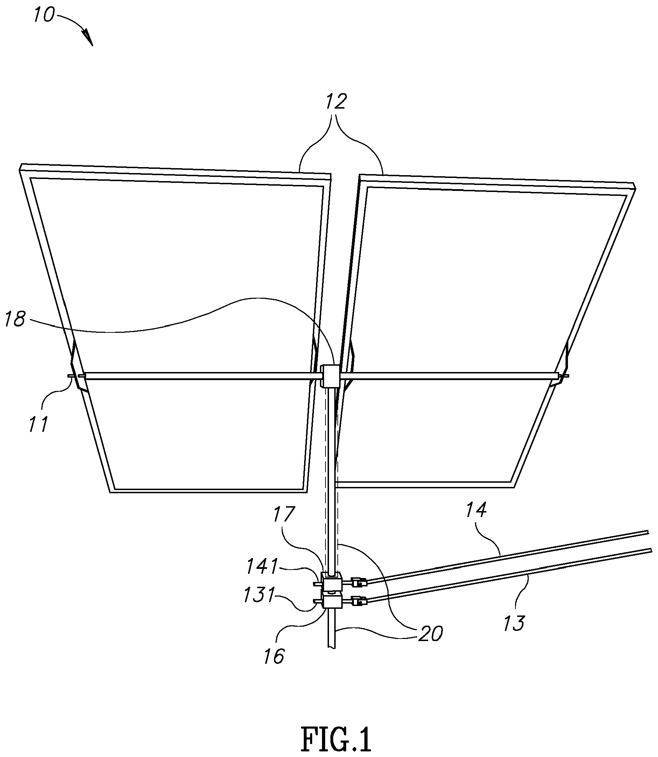

FIG. 1 illustrates a schematic view of an example of a dual axis solar tracking module **10** construed according to an embodiment of the present invention. As can be seen from the example illustrated in FIG. 1, the dual axis solar tracking module **10** comprises two solar panels **12** held within a frame, and the frame is mounted on a solid rod **11.**

Rod **11** extends laterally along the two solar panels, and has a first part that extends laterally along a first of the at least two solar panels, and a second part that extends laterally along a second of the at least two solar panels. Both parts of rod **11** comprise a screw type protrusion that matches a respective cavity located within transmission element **18,** so that by inserting said protrusions into said cavities, the first and second solar panels are attached to each other, thereby obtaining a combined rod **11,** which serves as a rotational axis along which the at least two solar panels are rotated.

Transmission element **18** which is used to apply rotational movement to rod **11,** may comprise any type of a gear that is capable of converting rotational movement along a vertical axis into a rotational movement along a horizontal axis. Such a gear type that is capable of converting a vertical movement into a horizontal movement may be: a straight bevel, a spiral bevel, a worm gear set, or any other applicable gear mechanism that is known in the art *per se* that is capable of converting a rotation along a vertical axis into a rotation along a horizontal axis.

Dual axis solar tracking module **10** further comprises a concentric arrangement which includes an inner element **15** (e.g., a rod, a bar, a pipe) and an outer hollow element **20** (e.g., a hollow rod), with a gap formed therebetween. This concentric arrangement is a major key point of the current disclosure, as such a concentric arrangement allows rotation of inner element **15** independently from the rotation of outer hollow element **20,** while having a freedom of 360° rotational movement, and the rotational movements may be provided by using different motors.

A dual axis solar tracking module shown in the present example comprises two solar panels (but obviously not restricted to two). However, when installing these dual axis solar tracking modules as part of a solar field, a row of solar tracking modules may be of any designed length by simply connecting modular dual axis solar tracking modules to each other in series, thereby achieving the required length of the solar field. In this example, by connecting extension elements **13** and **14** depicted in FIG. 1, with suitable elements that belong to another dual axis solar tracking module, and so on, as illustrated in the row of dual axis solar tracking module connected modularly to each other as illustrated in FIG. 2. Also, it should be noted that the modularity provided by implementing an array of dual axis solar tracking modules enable installing longer chains (rows) of dual axis solar tracking modules and shorter chains of dual axis solar tracking modules within the same array of dual axis solar tracking modules.

As illustrated in FIG. 2, both inner element **15** and outer hollow element **20** are vertical elements that have the same rotational axis. Inner element **15** is configured to be rotated within the inner space of outer hollow element **20.** The outer hollow element, **20,** is configured to be rotated by transmission element **17** whereas inner element **15** is configured to be rotated by transmission element **16.** Examples for applicable transmission mechanisms were discussed hereinabove with respect to transmission element **18.** In summary, each of the rotational vertical elements is connected via a different transmission element to a respective horizontal element (e.g., a bar). Consequently, the rotational movement of inner element **15** is controlled by the movement of the horizontal bar **141** where the movement of horizontal bar **141** is affected by a respective motor, whereas the rotational movement of outer hollow element **20** is controlled by the movement of the horizontal bar **131** which is affected by another motor.

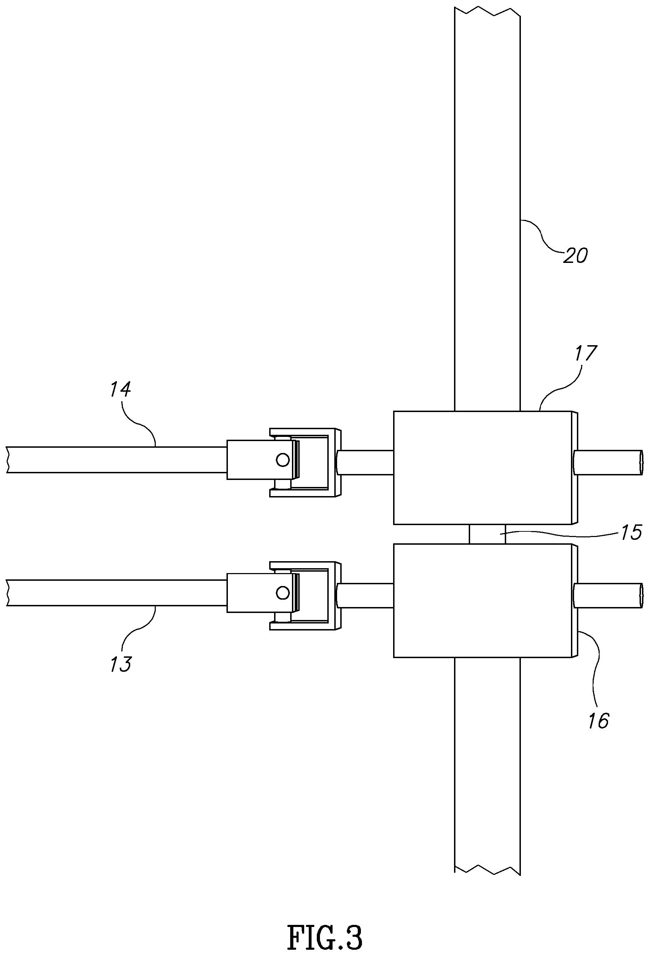

FIG. 3 presents an enlarged view of the elements that belong to the movement conversion mechanism whereby the horizontal movement induced by horizontal elements **13** and **14** is converted by transmission elements **16** and **17,** respectively, into vertical rotation of inner element **15** and outer hollow element **20,** which in turn is converted to the rotational movement for operating the dual axis solar tracking module.

According to an embodiment of the present invention, the motors that are used to provide the rotational movement of both vertical elements the outer hollow element **20** and the inner element **15** are located away from the vertical and horizontal elements.

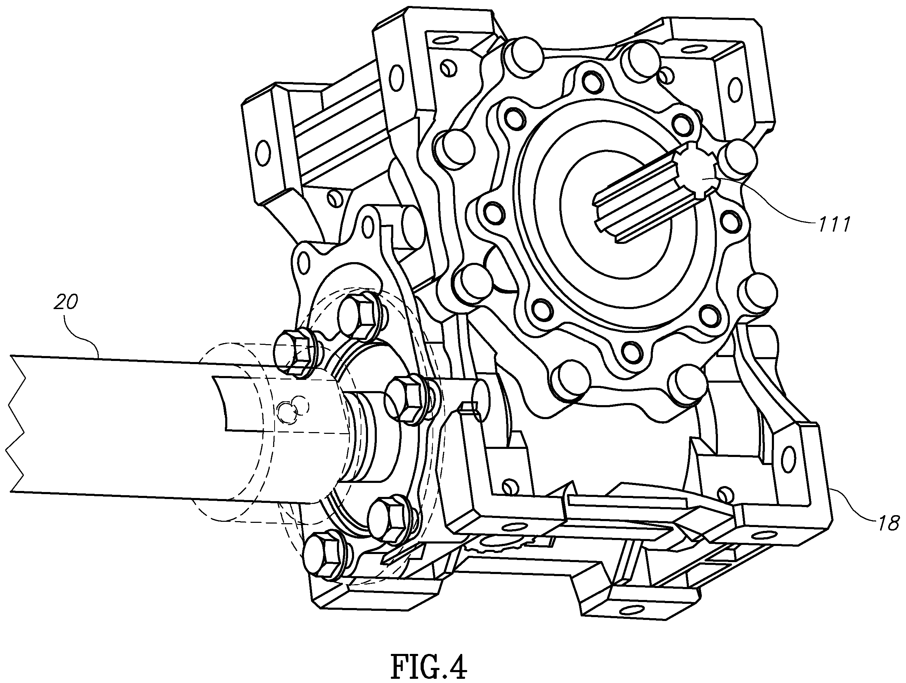

FIG. 4 demonstrates an extended view of the upper part of the dual axis tracking module. Both the outer hollow element **20** and inner element **15** are connected to transmission element **18.** The connection of inner element **15** to rod **11** (via the respective transmission means) is done by using the latter's polygonal edge **111,** and this connection in turn causes the rotation of the PV panels in this example around the horizontal axis (left-right), whereas outer hollow element **20** causes the rotation of the PV panels around the vertical axis (up-down). The combination of the vertical movement and the horizontal movement, as provided by the present invention, enables achieving any desired orientation of the PV panels, thereby obtaining a full tracking of the sun radiation by the dual axis solar tracking module of the present disclosure throughout the day.

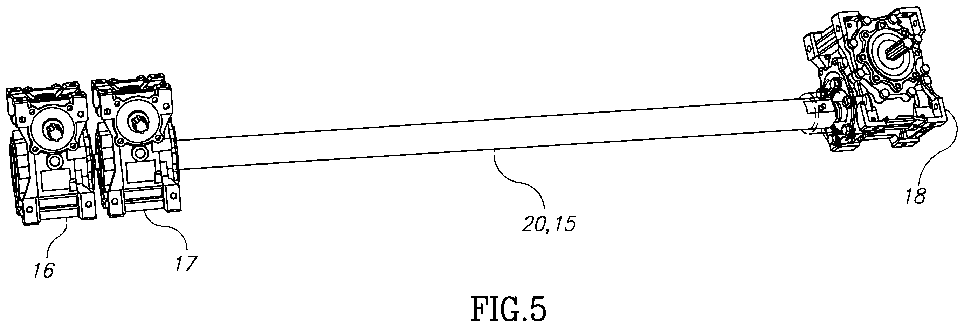

FIG. 5 demonstrates an extended view of the transmission assembly associated with a dual axis tracking module construed in accordance with an embodiment of the present invention. This FIG. shows transmission elements **16, 17** and **18** as well as the concentric arrangement that comprises the outer hollow element **20** and the inner element **15.**

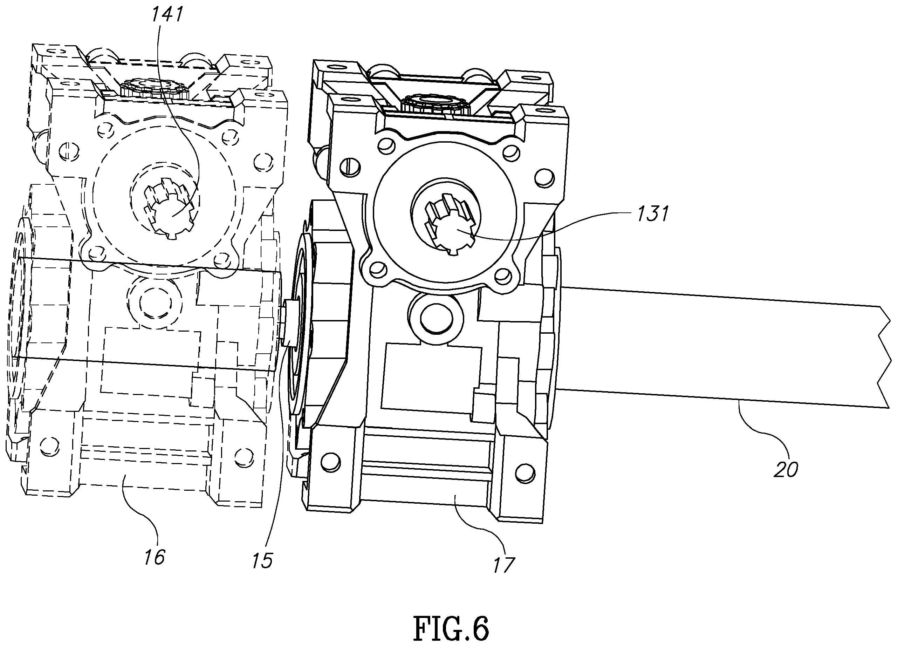

FIG. 6 demonstrates an extended view of the bottom area of a dual axis tracking module construed in accordance with an embodiment of the present invention. In this FIG., the two transmission elements **16** and **17** are shown with their respective polygonal connecting elements **141** and **131,** respectively. When transmission element **17** rotates outer hollow element **20,** the transmission element **16** rotates the inner element **15.**

As described above, the option of using rods **13** and **14** demonstrated in FIG. 2, for rotating the dual axis solar tracking module through transmission elements **16** and **17,** enables adding similar extension rods **131** and **141** (depicted in FIG. 1) which are configured to provide horizontal rotation movement to an adjacent dual axis solar tracking module, by connecting each one of rods **131** and **141** to the very same transmission element to which rods **13** and **14** are also connected, respectively. In such a way, an additional dual axis solar tracking module can be connected to extension rods **13** and **14.** A similar connection of further adjacent dual axis solar tracking modules may be carried out in a modular fashion, until an array of connected dual axis solar tracking modules having a desired number of dual axis solar tracking module s is obtained. Thus, the whole array described herein may be operated by using only two motors that are connected to two horizontal rods, via series of transmission elements followed by additional extension rods, so that these two motors activate the whole array of the dual axis solar tracking modules.

According to another embodiment of the present invention, an array of dual axis solar tracking modules is installed in an area such as green houses, fences, agriculture areas and the like, wherein the direction and location of the dual axis solar tracking modules are dictated by the area at which the array is installed. It should be noted that the solution provided by the present invention, provides an advantageous option to have an independent tracking mechanism that is a light weight mechanism, hence there is no need for the provisioning of a support as in a case where the mechanism is a heavy weight mechanism, for example in case there would have been a need to install a motor on each dual axis solar tracking module. In cases that such a motor would have been required on a per module basis, that would have led, due to economic reasons, to the need to have a larger panels surface per each tracking module, in order to cover for energy losses incurred if a motor were to be mounted on each dual axis solar tracking module. This method offers a substantial advantage in agricultural applications where there is a need to maintain a controlled shadowing conditions over the whole agricultural areas. In this case small panel surfaces well distributed, offer a much better solution than if larger panel surfaces were to be installed per a single location point.

According to an embodiment of the present invention, the extension rods mechanism and consequently the ability to apply rotations to the connected plurality of dual axis solar tracking modules, by a single motor installed remotely from the dual axis solar tracking modules, results in a situation whereby a complete shadowing may be avoided and an additional solar time may be used during which sun rays penetrate between the solar tracking modules, thereby capturing additional solar radiation that would reach the bottom side of the bifacial panel, without extending the distance between the rows of the solar tracking modules. By implementing the embodiment described above, an additional significant benefit is achieved, namely, enabling extension of the number of hours during the day, in which the system can be used effectively. Enabling the extension of the solar radiation hours also improves growth of agricultural crops at the same area where the solar field is installed, thereby enabling effective dual-purpose usage of that area.

Another advantage of the current solution is its modular character, which provides among others the following advantages:
When using a plurality of dual axis solar tracking modules, each pair of the horizontal extending rods is detachably connected to at least one of a pair's members of adjacent dual axis solar tracking modules. This feature is rather useful when carrying out repair or maintenance operations of the dual axis solar tracking modules. Furthermore, this feature also allows a very easy way to customize the total length of an array of dual axis solar tracking modules, as well as to control distances between adjacent dual axis solar tracking modules, in any row of the double axis solar tracking modules at any given time. In other words, the distance between dual axis solar tracking modules that belong to one pair of dual axis solar tracking modules can be different from the distance extending between dual axis solar tracking modules that belong to another pair of dual axis solar tracking modules, even though these dual axis solar tracking modules are installed at the same raw of an array of dual axis solar tracking modules. Moreover, the ability to affect an orientation change of rods 13 and 14 as illustrated in FIG. 3, enables shifting a dual axis solar tracking module to any lateral point as needed, while still remaining connected to a remote rotation mechanism.

The system configuration presented herein has the advantage of being potentially of light weight and small size, and the moments that may be applied by the wind to such a design would be minimal. However, in the case of large torque that might be generated once in a while, according to an embodiment of the invention, a wind sensor is provided which is part of the system, preferable located near solar panels **12,** and wherein that wind sensor is able to communicate via a wire or a wireless communication with the motor(s) so that the motor(s) is configured to move the dual axis solar tracking module(s) to a stow position or to position the module(s) parallel to the wind direction.

One of the optional uses of the dual axis solar tracking modules in accordance with an embodiment of the present invention, is by mounting these modules on greenhouses.

Moreover, as will be appreciated by those skilled in the art, the solution provided by the present invention provides a rather flexible option of installing an array of dual axis solar tracking modules such as by using different lengths of the pairs of extension rods, which will result in a non-equal spacing between pairs of dual axis solar tracking modules.

It should be noted that some of the above-described embodiments describe the best mode contemplated by the inventors and therefore include structure, acts or details of structures and acts that may not be essential to the invention and which are described as examples. Structure and acts described herein are replaceable by equivalents which perform the same function, even if the structure or acts are different, as known in the art. Therefore, the scope of the invention is limited only by the elements and limitations as used in the claims. When used in the following claims, the terms "comprise", "include", "have" and their conjugates mean "including but not limited to".

## Claims

1. A dual axis solar tracking module, comprising:
at least one solar panels rotatably coupled to an element that extends laterally along the at least one solar panel, wherein the element that extends laterally along the at least one solar panel is configured to rotate the at least one solar panel;
a frame, for mounting the at least one solar panel thereat;
a transmission system configured to enable rotating said dual axis solar tracking module along each of the two rotational axes;
wherein said transmission system is **characterized in that** it comprises two or more motors and a concentric arrangement having an outer hollow element and an inner element, and wherein said two or more motors are configured to rotate both said outer hollow element and said inner element;
wherein said outer hollow element is coupled to a first transmission means configured to enable rotation of said dual axis solar tracking module along a first of the two rotational orthogonal axes;
wherein said inner element is coupled to a second transmission means configured to enable rotation of said dual axis solar tracking module along a second of the two rotational orthogonal axes; and
wherein said transmission system is configured to convert rotations of one member from among said outer hollow element and said inner element, into rotations affected along a horizontal axis, and to convert rotations of another member from among said outer hollow element and said inner element, into rotations affected along a vertical axis, thereby enabling movement of said dual axis solar tracking module along two axes for tracking incident solar radiation.

2. The dual axis solar tracking module of claim 1, wherein the concentric arrangement allows the inner element to rotate independently from the rotation of the outer hollow element, and wherein the rotational movements of said inner element and said out outer hollow element are provided by using two different motors.

3. The dual axis solar tracking module of claim 1, wherein each of the inner element and the outer hollow element is provided with its own transmission mechanism.

4. The dual axis solar tracking module of claim 3, further comprising two horizontal bars each connected to a respective transmission mechanism, and wherein movements of each of said horizontal bars affected by a respective motor, are converted into rotations of the corresponding inner element and outer hollow element.

5. The dual axis solar tracking module of claim 1, wherein at least one of said two solar panels is a bifacial photovoltaic panel.

6. The dual axis solar tracking module of claim 1, wherein said module is configured to be connected to another such a dual axis solar tracking module, by using a pair of horizontal bars.

7. The dual axis solar tracking module of claim 1, wherein said frame is configured to be attached to an object that has already been installed at a site where said dual axis solar tracking module is about to be mounted.

8. The dual axis solar tracking module of claim 7, wherein the attachment of said dual axis solar tracking module to said object already installed at the site, is carried out while said object is oriented at any arbitrary azimuth.

9. The dual axis solar tracking module of claim 2, wherein the two different motors are located physically remotely from said dual axis solar tracking module, thereby avoiding shadowing of said dual axis solar tracking module by said two different motors.

10. A system comprising a plurality of dual axis solar tracking modules of claim 1, wherein said system is configured to operate by using only two motors.

11. The system of claim 10, wherein a distance extending between dual axis solar tracking modules that belong to a first pair of dual axis solar tracking modules is different from a distance extending between dual axis solar tracking modules that belong to a second pair.

12. The system of claim 10, further comprising a wind sensor which is configured be in communication with motors of said system which are responsible for the movement of the dual axis solar tracking modules, and wherein said wind sensor is configured to control said motors to move the dual axis solar tracking modules to a stow position or to position so that the dual axis solar tracking modules are positioned parallel to the wind direction.

13. The system of claim 10, wherein at least one pair of adjacent dual axis solar tracking modules are connected to each other by a pair of horizontal bars, and wherein a movement of one said pair of adjacent dual axis solar tracking modules induced by a motor, is translated by said pair of horizontal bars to a respective movement of the other of said pair of adjacent dual axis solar tracking modules.

14. The system of claim 10, wherein at least two of the dual axis solar tracking modules are installed at different azimuths from each other relative to one or both axes of a solar array comprised in said system.

15. The system of claim 10, wherein a plurality of dual axis solar tracking modules are arranged in a row and connected in modular way, thereby enabling installation of rows of dual axis solar tracking modules having different lengths.

16. The system of claim 10, wherein at least two of the dual axis solar tracking modules are located at different orientations for overcoming problems due to presence of local topography obstacles at the installation site.

## Patentansprüche

1. Zweiachsiges Solarnachführungs-Modul, das umfasst:
wenigstens ein Solarpanel, das drehbar mit einem Element gekoppelt ist, das sich seitlich an dem wenigstens einen Solarpanel erstreckt, wobei das Element, das sich seitlich an dem wenigstens einen Solarpanel erstreckt, so ausgeführt ist, dass es das wenigstens eine Solarpanel dreht;
einen Rahmen zum Anbringen des wenigstens einen Solarpanels daran;
ein Übertragungssystem, das so ausgeführt ist, dass es Drehen des zweiachsigen Solarnachführungs-Moduls entlang jeder der zwei Drehachsen ermöglicht;
wobei das Übertragungssystem **dadurch gekennzeichnet ist, dass** es zwei oder mehr Motoren sowie eine konzentrische Anordnung umfasst, die ein äußeres hohles Element sowie ein inneres Element aufweist, und wobei die zwei oder mehr Motoren so ausgeführt sind, dass sie sowohl das äußere hohle Element als auch das innere Element drehen;
wobei das äußere hohle Element mit einer ersten Übertragungseinrichtung gekoppelt ist, die so ausgeführt ist, dass sie Drehung des zweiachsigen Solarnachführungs-Moduls entlang einer ersten der zwei orthogonalen Drehachsen ermöglicht;
wobei das innere Element mit einer zweiten Übertragungseinrichtung gekoppelt ist, die so ausgeführt ist, dass sie Drehung des zweiachsigen Solarnachführungs-Moduls entlang einer zweiten der zwei orthogonalen Drehachsen ermöglicht; und
wobei das Übertragungssystem so ausgeführt ist, dass es Drehungen eines Elementes von dem äußeren hohlen Element und dem inneren Element in Drehungen umwandelt, die entlang einer horizontalen Achse ausgeführt werden, und Drehungen eines anderen Elementes von dem äußeren hohlen Element und dem inneren Element in Drehungen umwandelt, die entlang einer vertikalen Achse ausgeführt werden, sodass Bewegung des zweiachsigen Solarnachführungs-Moduls entlang zweier Achsen zum Nachverfolgen auftreffender Sonnenstrahlung ermöglicht wird.

2. Zweiachsiges Solarnachführungs-Modul nach Anspruch 1, wobei die konzentrische Anordnung zulässt, dass sich das innere Element unabhängig von der Drehung des äußeren hohlen Elementes dreht, und wobei die Drehbewegungen des inneren Elementes sowie des äußeren hohlen Elementes unter Einsatz zweier verschiedener Motoren erzeugt werden.

3. Zweiachsiges Solarnachführungs-Modul nach Anspruch 1, wobei das innere Element und das äußere hohle Element jeweils mit einem eigenen Übertragungsmechanismus versehen sind.

4. Zweiachsiges Solarnachführungs-Modul nach Anspruch 3, das des Weiteren zwei horizontale Stäbe umfasst, die jeweils mit einem entsprechenden Übertragungsmechanismus verbunden sind, und wobei Bewegungen jedes der horizontalen Stäbe, die durch einen entsprechenden Motor erzeugt werden, in Drehungen des jeweiligen inneren Elementes sowie äußeren hohlen Elementes umgewandelt werden.

5. Zweiachsiges Solarnachführungs-Modul nach Anspruch 1, wobei wenigstens eines der zwei Solarpanel ein bifaziales Photovoltaikmodul ist.

6. Zweiachsiges Solarnachführungs-Modul nach Anspruch 1, wobei das Modul so ausgeführt ist, dass es unter Verwendung eines Paars horizontaler Stäbe mit einem weiteren derartigen zweiachsigen Solarnachführungs-Modul verbunden wird.

7. Zweiachsiges Solarnachführungs-Modul nach Anspruch 1, wobei der Rahmen so ausgeführt ist, dass er an einem Objekt angebracht wird, das bereits an einem Standort installiert ist, an dem das zweiachsige Solarnachführungs-Modul montiert werden soll.

8. Zweiachsiges Solarnachführungs-Modul nach Anspruch 7, wobei die Anbringung des zweiachsigen Solarnachführungs-Moduls an dem bereits an dem Standort installierten Objekt ausgeführt wird, während das Objekt in einem beliebigen Azimut ausgerichtet ist.

9. Zweiachsiges Solarnachführungs-Modul nach Anspruch 2, wobei die zwei verschiedenen Motoren physisch entfernt von dem zweiachsigen Solarnachführungs-Modul angeordnet sind und damit Abschattung des zweiachsigen Solarnachführungs-Moduls durch die zwei verschiedenen Motoren vermieden wird.

10. System, das eine Vielzahl zweiachsiger Solarnachführungs-Module nach Anspruch 1 umfasst, wobei das System so ausgeführt ist, dass es unter Einsatz von lediglich zwei Motoren arbeitet.

11. System nach Anspruch 10, wobei sich ein Abstand, zwischen zweiachsigen Solarnachführungs-Modulen, die zu einem ersten Paar zweiachsiger Solarnachführungs-Module gehören, von einem Abstand zwischen zweiachsigen Solarnachführungs-Modulen unterscheidet, die zu einem zweiten Paar gehören.

12. System nach Anspruch 10, das des Weiteren einen Windsensor umfasst, der so ausgeführt ist, dass er mit Motoren des Systems in Verbindung steht, die für die Bewegung der zweiachsigen Solarnachführungs-Module verantwortlich sind, und wobei der Windsensor so ausgeführt ist, dass er die Motoren so steuert, dass sie die zweiachsigen Solarnachführungs-Module an eine Schutzstellung oder eine Position bewegen, an der die zweiachsigen Solarnachführungs-Module parallel zu der Windrichtung ausgerichtet sind.

13. System nach Anspruch 10, wobei wenigstens ein paar aneinandergrenzender zweiachsiger Solarnachführungs-Module über ein Paar horizontaler Stäbe miteinander verbunden sind und eine Bewegung eines des Paars aneinandergrenzender zweiachsiger Solarnachführungs-Module, die durch einen Motor bewirkt wird, durch die paarigen horizontalen Stäbe in eine entsprechende Bewegung des anderen des Paars aneinandergrenzender zweiachsiger Solarnachführungs-Module umgewandelt wird.

14. System nach Anspruch 10, wobei wenigstens zwei der zweiachsigen Solarnachführungs-Module in voneinander verschiedenen Azimuten relativ zu einer oder beiden Achse/n einer in dem System enthaltenen Solaranlage installiert sind.

15. System nach Anspruch 10, wobei eine Vielzahl zweiachsiger Solarnachführungs-Module in einer Reihe angeordnet und modular verbunden sind, so dass Installation von Reihen zweiachsiger Solarnachführungs-Module mit unterschiedlichen Längen ermöglicht wird.

16. System nach Anspruch 10, wobei wenigstens zwei der zweiachsigen Solarnachführungs-Module sich in unterschiedlichen Ausrichtungen befinden, um Probleme aufgrund von Vorhandensein lokaler topographischer Hindernisse an dem Installations-Standort zu vermeiden.

## Revendications

1. Module de suivi solaire à deux axes, comprenant :
au moins un panneau solaire couplé de manière rotative à un élément qui s'étend latéralement le long dudit au moins un panneau solaire, dans lequel l'élément qui s'étend latéralement le long dudit au moins un panneau solaire est configuré pour faire tourner ledit au moins un panneau solaire ;
un cadre pour y monter ledit au moins un panneau solaire ;
un système de transmission configuré pour permettre une rotation dudit module de suivi solaire à deux axes le long de chacun des deux axes de rotation ;
dans lequel ledit système de transmission est **caractérisé en ce qu'**il comprend deux ou plusieurs moteurs et un agencement concentrique ayant un élément creux externe et un élément interne, et dans lequel lesdits deux ou plusieurs moteurs sont configurés pour faire tourner à la fois ledit élément creux externe et ledit élément interne ;
dans lequel ledit élément creux externe est couplé à un premier moyen de transmission configuré pour permettre une rotation dudit module de suivi solaire à deux axes le long d'un premier axe des deux axes de rotation orthogonaux ;
dans lequel ledit élément interne est couplé à un deuxième moyen de transmission configuré pour permettre la rotation dudit module de suivi solaire à deux axes le long d'un deuxième axe desdits deux axes de rotation orthogonaux ; et
dans lequel ledit système de transmission est configuré pour convertir les rotations d'un composant parmi ledit élément creux externe et ledit élément interne en rotations effectuées le long d'un axe horizontal, et pour convertir les rotations d'un autre composant parmi ledit élément creux externe et ledit élément interne en rotations effectuées le long d'un axe vertical, permettant ainsi un mouvement dudit module de suivi solaire à deux axes le long de deux axes pour suivre le rayonnement solaire incident.

2. Module de suivi solaire à deux axes selon la revendication 1, dans lequel l'agencement concentrique permet à l'élément interne de tourner indépendamment de la rotation de l'élément creux externe, et dans lequel les mouvements de rotation dudit élément interne et dudit élément creux externe sont assurés en utilisant deux moteurs différents.

3. Module de suivi solaire à deux axes selon la revendication 1, dans lequel chaque élément parmi l'élément interne et l'élément creux externe est doté de son propre mécanisme de transmission.

4. Module de suivi solaire à deux axes selon la revendication 3, comprenant en outre deux barres horizontales connectées chacune à un mécanisme de transmission respectif, et dans lequel les mouvements de chacune desdites barres horizontales effectués par un moteur respectif sont convertis en rotations de l'élément interne et de l'élément creux externe correspondants.

5. Module de suivi solaire à deux axes selon la revendication 1, dans lequel au moins l'un desdits deux panneaux solaires est un panneau photovoltaïque bifacial.

6. Module de suivi solaire à deux axes selon la revendication 1, dans lequel ledit module est configuré pour être connecté à un autre module de suivi solaire à deux axes identique à l'aide d'une paire de barres horizontales.

7. Module de suivi solaire à deux axes selon la revendication 1, dans lequel ledit cadre est configuré pour être fixé à un objet qui a déjà été installé sur un site où ledit module de suivi solaire à deux axes doit être monté.

8. Module de suivi solaire à deux axes selon la revendication 7, dans lequel la fixation dudit module de suivi solaire à deux axes audit objet déjà installé sur le site est effectuée tandis que ledit objet est orienté à un azimut arbitraire quelconque.

9. Module de suivi solaire à deux axes selon la revendication 2, dans lequel les deux moteurs différents sont physiquement distants dudit module de suivi solaire à deux axes, évitant ainsi l'ombrage dudit module de suivi solaire à deux axes par lesdits deux moteurs différents.

10. Système comprenant une pluralité de modules de suivi solaire à deux axes selon la revendication 1, dans lequel ledit système est configuré pour fonctionner en utilisant seulement deux moteurs.

11. Système selon la revendication 10, dans lequel la distance entre les modules de suivi solaire à deux axes qui appartiennent à une première paire de modules de suivi solaire à deux axes est différente de la distance entre les modules de suivi solaire à deux axes qui appartiennent à une deuxième paire.

12. Système selon la revendication 10, comprenant en outre un anémomètre qui est configuré pour être en communication avec les moteurs dudit système qui sont responsables du mouvement des modules de suivi solaire à deux axes, et dans lequel ledit anémomètre est configuré pour contrôler lesdits moteurs afin de déplacer les modules de suivi solaire à deux axes jusqu'à une position de rangement ou pour les positionner de telle sorte que les modules de suivi solaire à deux axes sont positionnés parallèlement à la direction du vent.

13. Système selon la revendication 10, dans lequel les modules d'au moins une paire de modules de suivi solaire à deux axes adjacents sont connectés l'un à l'autre par une paire de barres horizontales, et dans lequel un mouvement induit par un moteur d'un module de ladite paire de modules de suivi solaire à deux axes adjacents est transmis par ladite paire de barres horizontales pour produire un mouvement respectif de l'autre module de ladite paire de modules de suivi solaire à deux axes adjacents.

14. Système selon la revendication 10, dans lequel au moins deux desdits modules de suivi solaire à deux axes sont installés à des azimuts différents l'un de l'autre par rapport à l'un des axes ou aux deux axes d'un réseau solaire compris dans ledit système.

15. Système selon la revendication 10, dans lequel une pluralité de modules de suivi solaire à deux axes sont agencés selon une rangée et connectés de manière modulaire, permettant ainsi l'installation de rangées de modules de suivi solaire à deux axes ayant des longueurs différentes.

16. Système selon la revendication 10, dans lequel au moins deux des modules de suivi solaire à deux axes présentent des orientations différentes pour surmonter les problèmes dus à la présence d'obstacles topographiques locaux sur le site d'installation.
